# EUROPÄISCHE PATENTSCHRIFT

(11) **EP 2 059 692 B1**
(45) Veröffentlichungstag und Bekanntmachung des Hinweises auf die Patenterteilung: **23.03.2011**
(21) Anmeldenummer: 07786405.6
(22) Anmeldetag: 28.07.2007
(51) Int. Cl.: F16F 13/10, F16F 13/26

(54) **HYDRAULISCH GEDÄMPFTES AGGREGATLAGER**
HYDRAULICALLY DAMPED UNIT BEARING
PALIER DE GROUPE À AMORTISSEMENT HYDRAULIQUE

(30) Priorität: 31.08.2006 DE 102006040932
(43) Veröffentlichungstag der Anmeldung: 20.05.2009
(73) Patentinhaber: Volkswagen Aktiengesellschaft, 38436 Wolfsburg (DE)
(72) Erfinder: SCHULZE, Carsten, 38444 Wolfsburg (DE)
(86) Internationale Anmeldenummer: PCT/EP2007/006695
(87) Internationale Veröffentlichungsnummer: WO 2008/025421

(56) Entgegenhaltungen:
- EP-A- 1 544 501
- DE-A1- 10 121 399
- DE-A1- 10 213 750
- US-A- 5 908 186

## Beschreibung

Die Erfindung bezieht sich auf ein hydraulisch gedämpftes Aggregatlager, mit dem durch eine Veränderung eines Tilgerkanalquerschnitts das Dämpfungsverhalten über einen breiten Frequenzbereich eingestellt und während Betriebs variiert werden kann.

Entsprechende Aggregatlager lassen sich beispielsweise als hydraulische Motorlager einsetzen, um die Übertragung von Schwingungen von einem Antriebsmotor an eine Fahrzeugkarosserie in Abhängigkeit der Schwingungserregung zu dämpfen. Jedoch sind derartige Aggregatlager grundsätzlich überall dort einsetzbar, wo ein Schwingungen erzeugendes Aggregat gelagert oder gegen eine Schwingungserregung geschützt werden muss.

In der DE 101 21 399 A1 wird ein hydraulisch gedämpftes Aggregatlager beschrieben, das einen gummielastischen Federkörper und eine an diesen angrenzende, mit Arbeitsmedium gefüllte Arbeitskammer sowie eine nachgiebige Ausgleichswand und eine an diese angrenzende, mit Arbeitsmedium gefüllte Ausgleichskammer aufweist. Weiterhin ist bei dem bekannten Aggregatlager eine Kopplungsöffnung zwischen der Arbeitskammer und der Ausgleichskammer vorgesehen, in die sich ein Kolben erstreckt. Der Kolben bildet mit der Kopplungsöffnung einen Tilgerkanal, dessen Querschnitt von der Stellung des Kolbens abhängt. Über eine mit dem Kolben gekoppelte Betätigungseinrichtung kann die Stellung des Kolbens relativ zu der Kopplungsöffnung verändert werden. Hierdurch kann die hydraulische Kopplung zwischen der Arbeitskammer und der Ausgleichskammer und damit die dynamische Steifigkeit des Lagers verändert werden, so dass dieses dynamisch an die jeweilige Betriebsituation angepasst werden kann. Im Vergleich zu Aggregatlagern mit fest vorgegebenem Tilgerkanalquerschnitt werden hierdurch über einen erheblich größeren Frequenzbereich günstige Dämpfungs- und Isolationseigenschaften erzielt.

Während des Betriebs können an dem Kolben zeitweilig verhältnismäßig große Kräfte auftreten, durch die unter Umständen die Einstellung des Tilgerkanalquerschnitts beeinträchtigt wird.

Ein weiteres hydraulisch gedämpftes Aggregatlager mit variablem Tilgerkanalquerschnitt wird in der EP 1 544 501 A1 beschrieben. Dort wird vorgeschlagen, in Anbetracht der in der Arbeitskammer herrschenden Drücke, die im Spitzenbereich bei 5 bar liegen können, den Kolben so anzuordnen, dass dieser durch den Druck der Arbeitskammer gegen die Tilgerkanalöffnung gedrückt wird. Ein Öffnen bzw. Vergrößern des Tilgerkanalquerschnitts erfolgt dort folglich gegen den Druck in der Arbeitskammer.

Davon ausgehend liegt der Erfindung die Aufgabe zugrunde, ein hydraulisch gedämpftes Aggregatlager zu schaffen, das eine genaue Steuerung des Tilgerkanalquerschnitts ermöglicht.

Diese Aufgabe wird durch ein Aggregatlager gemäß Anspruch 1 gelöst. Das erfindungsgemäße Aggregatlager umfasst insbesondere einen gummielastischen Federkörper und eine an diesen angrenzende, mit Arbeitsmedium gefüllte Arbeitskammer, eine nachgiebige Ausgleichswand und eine an diese angrenzende, mit Arbeitsmedium gefüllte Ausgleichskammer, eine im wesentlichen rechteckige Kopplungsöffnung zwischen der Arbeitskammer und der Ausgleichskammer, einen bewegbaren Stempel mit im wesentlichen rechteckigem Querschnitt, der mit der Kopplungsöffnung einen von seiner Stellung abhängigen, variablen Tilgerkanalquerschnitt für das Arbeitsmedium bildet, und eine Betätigungseinrichtung zur Bewegung des Stempels relativ zu der Kopplungsöffnung zur Einstellung des Tilgerkanalquerschnitts.

Die Erfindung vermeidet einen runden oder kegelförmigen Kolben, wie er im Stand der Technik regelmäßig gebräuchlich ist. Vielmehr kommt ein Stempel mit einem im Wesentlichen rechteckigen Querschnitt zum Einsatz, der mit einer entsprechend geformten Kopplungsöffnung zusammenwirkt. Der Stempel kann unter Beibehaltung einer rechteckigen Grundform verrundete Ecken aufweisen. Hierdurch wird auf überraschend einfache Art und Weise eine Abstützung des bewegbaren Stempels erzielt, welche es erlaubt, den Tilgerkanalquerschnitt präziser einzustellen bzw. Veränderungen der Position des Stempels infolge von im Lager auftretenden Drücken und Querkräften gering zu halten.

Dies ermöglicht wiederum eine Verbesserung der frequenzabhängigen Isolationswirkung, wodurch sich in einem Kraftfahrzeug die Übertragung von Schwingungen vom Antriebsaggregat zum Fahrzeuginnenraum vermindern und die Akustikqualität im Fahrzeug verbessern lässt.

Zudem lässt sich ein sehr schmal bauendes Aggregatlager realisieren, das mit besonderem Bauraumvorteil in Fahrzeugen mit quer eingebautem Antriebsaggregat als Traglager eingesetzt werden kann.

Weitere, vorteilhafte Ausgestaltungen der Erfindung sind in den Patentansprüchen angegeben.

Vorzugsweise weist der Stempel zwei einander gegenüberliegende Führungsflächen auf, die an Wandabschnitten geführt sind, welche die Kopplungsöffnung begrenzen.

Ferner kann der rechteckige Querschnitt des Stempels durch zwei lange Seiten und zwei kurze Seiten gebildet werden, wodurch sich insgesamt eine sehr schmale Bauform realisieren lässt. Die Führungsflächen werden in diesem Fall bevorzugt an den kurzen Seiten des rechteckigen Querschnitts vorgesehen.

Grundsätzlich kann eine gute Führung bereits über ebene Wandflächen erzielt werden. Eine weitere Verbesserung zur Ausschaltung von Querkrafteinflüssen wird erhalten, indem zwischen mindestens einer der Führungsflächen des Stempels und dem korrespondierenden Wandabschnitt der Kopplungsöffnung ein Führungsvorsprung und eine diesen aufnehmende Führungsnut vorgesehen wird.

Der Tilgerkanalquerschnitt ist durch den Abstand von zwei einander gegenüberliegenden Flanken des Stempels relativ zu Wandabschnitten der Kopplungsöffnung einstellbar, wobei die Flanken vorzugsweise die langen Seiten des rechteckigen Querschnitts repräsentieren.

Gemäß einer weiteren, vorteilhaften Ausgestaltung der Erfindung sind die den Tilgerkanalquerschnitt begrenzenden Flanken des Stempels geneigt.

Die Neigung der Flanken an dem Stempel kann dabei so ausgeführt werden, dass sich diese in Richtung der Arbeitskammer, und damit umgekehrt wie in der EP 1 544 501 A1 beschrieben, verjüngen.

Beispielsweise kann der Stempel die Form eines Prismas mit rechteckiger Grundfläche aufweisen.

Die mit dem Stempel zusammenwirkende Kopplungsöffnung wird vorzugsweise in einer Zwischenwand ausgebildet, welche zwischen der Arbeitskammer und der Ausgleichskammer liegt. Für die Zwischenwand kann grundsätzlich auf die in der DE 101 21 399 A1 diesbezüglich offenbarten Gestaltungsformen zurückgegriffen werden.

Vorzugsweise wird jedoch die Zwischenwand durch ein rechteckiges Einsatzelement gebildet, das auf besonders einfache Art und Weise die Ausbildung einer der Stempelform angepassten Kopplungsöffnung sowie geeigneter Wandflächen zur Führung des Stempels ermöglicht.

Prinzipiell ist es möglich, die Arbeitskammer und die Ausgleichskammer über die Kopplungsöffnung bzw. den Tilgerkanalquerschnitt unmittelbar hydraulisch miteinander zu koppeln, um zwischen beiden Kammern einen Austausch von Arbeitsmedium zu ermöglichen.

Gemäß einer weiteren vorteilhaften Ausgestaltung der Erfindung kann zusätzlich jedoch auch eine Entkopplungsmembran vorgesehen werden. In diesem Fall mündet die Kopplungsöffnung in eine Zwischenkammer, die durch die Entkopplungsmembran von der Arbeitskammer getrennt ist, wobei die Entkopplungsmembran einen unmittelbaren Austausch von Arbeitsmedium unterbindet. Dennoch wird ein Druck durch eine Verformung der verhältnismäßig dünnen Membran übertragen, wodurch die Drücke in der Arbeitskammer und der Ausgleichskammer, gesteuert durch den Tilgerkanalquerschnitt, miteinander kommunizieren können. Die Entkopplungsmembran kann auch als steife, mit der Dämpfungsflüssigkeit schwingende Platte ausgeführt sein. Die Platte ist hierzu insgesamt verschiebbar gelagert.

Vorzugsweise ist die Entkopplungsmembran an dem Einsatzelement gehalten.

Ferner kann zwischen der Arbeitskammer und der Ausgleichskammer ein stets offener Dämpfungskanal vorgesehen werden. Auch dieser kann an dem Einsatzelement ausgebildet sein, wodurch sich ein einfacher Innenaufbau sowie gute Fertigung- und Montageeigenschaften ergeben.

Nachfolgend wird die Erfindung anhand eines in der Zeichnung dargestellten Ausführungsbeispiels näher erläutert. Die Zeichnung zeigt in:
- Figur 1: eine erste Schnittansicht eines hydraulisch gedämpften Aggregatlagers nach der Erfindung,
- Figur 2: eine weitere Schnittansicht des hydraulisch gedämpften Aggregatlagers,
- Figur 3: eine räumliche Ansicht einer ersten Ausführungsform für einen Stempel des Aggregatlagers nach Figur 1,
- Figur 4: eine räumliche Ansicht einer zweiten Ausführungsform für einen Stempel des Aggregatlagers nach Figur 1, und in
- Figur 5: eine räumliche Ansicht einer dritten Ausführungsform für einen Stempel des Aggregatlagers nach Figur 1.

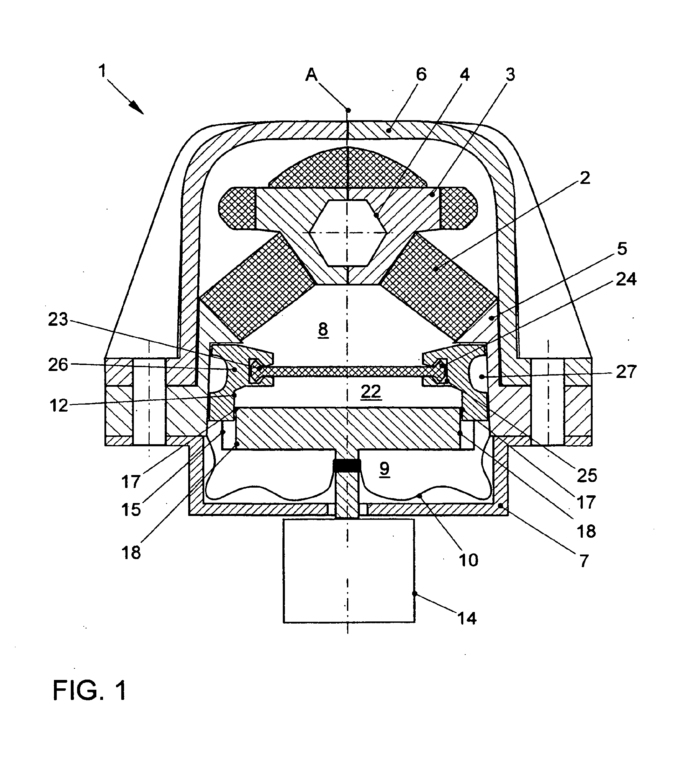

Das erste Ausführungsbeispiel in den Figur 1 bis 3 zeigt ein hydraulisch gedämpftes Aggregatlager 1 in Form eines Motorlagers für ein Kraftfahrzeug. Das Aggregatlager 1 weist einen gummielastischen Federkörper 2 auf, der über ein Anschlusselement 3 mit einem Aggregat, beispielsweise einem Antriebsaggregat eines Fahrzeugs gekoppelt wird. Das Anschlusselement 3 ist hierzu an den gummielastischen Federkörper 2 anvulkanisiert. An dem Anschlusselement 3 befindet sich eine Anschlussöffnung 4, die quer zu der Hauptachse A des gummielastischen Federkörpers 2 verläuft.

An den gummielastischen Federkörper 2 ist weiterhin ein Halter 5 anvulkanisiert, über den die Abstützung des Antriebsaggregats gegen ein stationäres Bauteil wie beispielsweise einen Lagerbock oder die Fahrzeugkarosserie erfolgt. Der Halter 5 ist mit einem Lastbügel 6 verbunden, der sich bogenförmig um den Federkörper 2 erstreckt. Weiterhin stützt sich an dem Halter 5 ein dem Lastbügel 6 gegenüberliegender Lagerdeckel 7 ab. Der Halter 5, der Lastbügel 6 und der Lagerdeckel 7 können über an diesen ausgebildete Flansche miteinander verspannt und gegebenenfalls gleichzeitig an einem Lagerbock bzw. der Fahrzeugkarosserie befestigt werden.

Der gummielastische Federkörper 2 begrenzt eine Arbeitskammer 8, die mit einem im Wesentlichen inkompressiblen Arbeitsmedium gefüllt ist. Weiterhin ist eine Ausgleichkammer 9 vorgesehen, die ebenfalls mit dem Arbeitsmedium gefüllt sein kann und durch eine nachgiebige Ausgleichswand 10 begrenzt ist. Die beiden Kammern 8 und 9 können in nachfolgend näher beschriebener Art und Weise über einen variablen Tilgerkanal 11 miteinander gekoppelt werden, dessen Strömungsquerschnitt verstellbar ist.

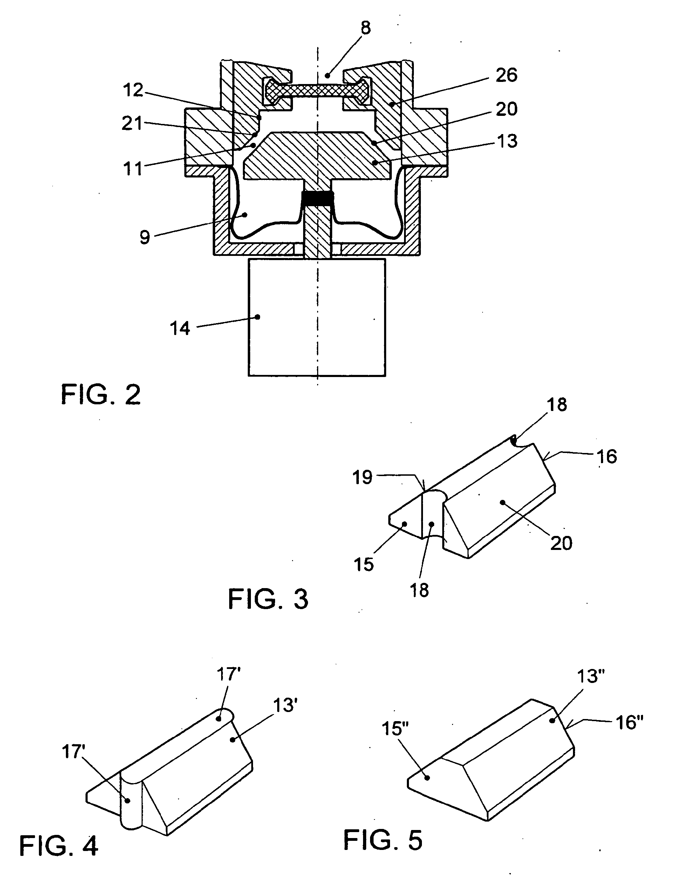

Der Tilgerkanal 11, der in Figur 2 in gut zu erkennen ist, wird durch eine rechteckige Kopplungsöffnung 12, die zwischen der Arbeitskammer 8 und der Ausgleichskammer 9 angeordnet ist, und einen bewegbaren Stempel 13 gebildet. Der Stempel 13 weist einen im Wesentlichen rechteckigen Querschnitt auf und ist relativ zu der Kopplungsöffnung 12 bewegbar. Dabei können die Ecken der rechteckigen Querschnittsform mit Radien abgerundet sein, wobei jedoch stets eine rechteckige Grundform erhalten bleibt. Weiterhin ist eine Betätigungseinrichtung 14 zur Bewegung des Stempels 13 vorgesehen, mit der der Stempel 13 zur Einstellung des Tilgerkanalquerschnitts senkrecht zu der Kopplungsöffnung 12 verfahren werden kann. Hierbei ist es auch möglich, die Kopplungsöffnung 12 vollständig zu verschließen.

Die Betätigungseinrichtung 14 ist vorzugsweise ein elektromechanischer Aktuator, der beispielsweise an der Außenseite des Lagerdeckels 7 festgelegt und über eine Schubstange mit dem Stempel 13 gekoppelt sein kann. Jedoch kann die Betätigung auch elektromagnetisch, pneumatisch oder hydraulisch erfolgen.

Der Stempel 13 ist in der Kopplungsöffnung 12 axial geführt. Hierzu weist dieser zwei einander gegenüberliegende, im Wesentlichen ebene Führungsflächen 15 und 16 auf, die sich an entsprechenden Wandabschnitten der Kopplungsöffnung 12 abstützen.

Bei dem ersten Ausführungsbeispiel sind, wie in Figur 1 und 3 gezeigt, zwischen den Führungsflächen 15 und 16 des Stempels 13 und den korrespondierenden Wandabschnitten der Kopplungsöffnung 12 jeweils ein Führungsvorsprung 17 und eine diesen aufnehmende Führungsnut 18 vorgesehen.

Wie Figur 4 zeigt, können die Führungsvorsprünge 17' auch am Stempel 13', die Führungsnuten hingegen an der Kopplungsöffnung vorgesehen werden. Alternativ hierzu können die entsprechenden Führungsflächen 15" und 16" des Stempels 13" auch als ebene Flächen ohne Vorsprünge oder Vertiefungen ausgeführt werden, wie dies in Figur 5 gezeigt ist.

In sämtlichen Fällen definieren die Führungsflächen 15 und 16 mit zwei weiteren, einander gegenüberliegenden Flanken 19 und 20 des Stempels 13 dessen rechteckigen Querschnitt. Die beiden Flanken 19 und 20 begrenzen in Zusammenwirkung mit gegenüberliegenden Wandabschnitten 21 der Kopplungsöffnung 12 den Tilgerkanal 11.

Dabei können sowohl die Flanken 19 und 20 als auch die diesen gegenüberliegenden Wandabschnitte 21 der Kopplungsöffnung 12 geneigt sein, so dass sich für den Stempel 13 die Grundform eines Prismas über einer rechteckigen Grundfläche ergibt. Die Flanken 19 und 20 an dem Stempel 13 verjüngen sich hierbei in Richtung der Arbeitskammer 8.

Prinzipiell ist unter einem rechteckigen Querschnitt auch ein quadratischer Querschnitt zu verstehen. Durch einen Querschnitt mit zwei langen Seiten und zwei kurzen Seiten kann demgegenüber eine besonders flache Bauweise des Aggregatlagers 1 realisiert werden. In einem solchen Fall befinden sich die den Tilgerkanal 11 begrenzenden Flanken 19 und 20 an den langen Seiten, so dass bereits durch kleine Axialverschiebungen des Stempels 13 eine merkliche Veränderung des Tilgerkanalquerschnitts erzielt werden kann. Dies ermöglicht ein schnelles Ansprechen des Aggregatslagers bei einer Veränderung der Erregerfrequenz.

Wie Figur 1 weiter entnommen werden kann, sind bei dem dargestellten Ausführungsbeispiel die Arbeitskammer 8 und die Ausgleichskammer 9 über den Tilgerkanal 11 nicht unmittelbar verbunden. Vielmehr ist der Kopplungsöffnung 12 eine Zwischenkammer 22 vorgeschaltet. Diese Zwischenkammer 22 ist mechanisch über eine dünne Entkopplungsmembran 23 mit der Arbeitskammer 8 wirkverbunden. Dabei unterbindet die Entkopplungsmembran 23 einen unmittelbaren Austausch von Arbeitsmedium, ermöglicht jedoch eine Druckübertragung. Wie Figur 1 zeigt, kann die Entkopplungsmembran 23 mit ihrem Rand 24 gelenkig in einer umlaufenden Nut 25 aufgenommen sein.

Sowohl die Entkopplungsmembran 23 als auch die Kopplungsöffnung 12 sind an einem Einsatzelement 26 vorgesehen, das in dem Halter 5 festgelegt ist. Auch das Einsatzelement 26, das gewissermaßen eine Zwischenwand zwischen der Arbeitskammer 8 und der Ausgleichskammer 9 darstellt, kann einen im Wesentlichen rechteckigen Querschnitt entsprechend der Kopplungsöffnung 13 bzw: dem Stempel 13 aufweisen.

Ferner kann an dem Einsatzelement 26 zusätzlich ein Dämpfungskanal 27 ausgebildet werden, der eine stets offene hydraulische Verbindung zwischen der Arbeitskammer 8 und der Ausgleichskammer 9 bereitstellt.

Das vorstehend erläuterte hydraulisch gedämpfte Aggregatlager ermöglicht eine schnelle und genaue Abstimmung über einen großen Frequenzbereich hinweg, so dass die dynamische Steifigkeit im Bereich von etwa 20 und 200 Hz gezielt unter die statische Steifigkeit abgesenkt werden kann.

### Bezugszeichenliste

- 1: Aggregatlager
- 2: gummielastischer Federkörper
- 3: Anschlusselement
- 4: Öffnung
- 5: Halter
- 6: Lastbügel
- 7: Lagerdeckel
- 8: Arbeitskammer
- 9: Ausgleichskammer
- 10: nachgiebige Ausgleichswand
- 11: Tilgerkanal
- 12: Kopplungsöffnung
- 13: Stempel
- 14: Betätigungseinrichtung
- 15: Führungsfläche
- 16: Führungsfläche
- 17: Führungsvorsprung
- 18: Führungsnut
- 19: Flanke
- 20: Flanke
- 21: Wandabschnitte
- 22: Zwischenkammer
- 23: Entkopplungsmembran
- 24: Rand
- 25: Nut
- 26: Einsatzelement
- 27: Dämpfungskanal

## Patentansprüche

1. Hydraulisch gedämpftes Aggregatlager, umfassend:
- einen gummielastischen Federkörper (2) und eine an diesen angrenzende, mit Arbeitsmedium gefüllte Arbeitskammer (8),
- eine nachgiebige Ausgleichswand (10) und eine an diese angrenzende, mit Arbeitsmedium gefüllte Ausgleichskammer (9), **gekennzeichnet durch**
- eine im Wesentlichen rechteckige Kopplungsöffnung (12) zwischen der Arbeitskammer (8) und der Ausgleichskammer (9),
- einen bewegbaren Stempel (13) mit einem im Wesentlichen rechteckigen Querschnitt, der mit der Kopplungsöffnung (12) einen von seiner Stellung abhängigen, variablen Tilgerkanalquerschnitt für das Arbeitsmedium bildet, und
- eine Betätigungseinrichtung (14) zur Bewegung des Stempels (13) relativ zu der Kopplungsöffnung (12) zur Einstellung des Tilgerkanalquerschnitts.

2. Hydraulisch gedämpftes Aggregatlager nach Anspruch 1, **dadurch gekennzeichnet, dass** der Stempel (13) zwei einander gegenüberliegende Führungsflächen (15, 16) aufweist, die an Wandabschnitten geführt sind, welche die Kopplungsöffnung (12) begrenzen.

3. Hydraulisch gedämpftes Aggregatlager nach Anspruch 1 oder 2, **dadurch gekennzeichnet, dass** der im Wesentlichen rechteckige Querschnitt zwei lange Seiten und zwei kurze Seiten aufweist und die Führungsflächen (15, 16) an den kurzen Seiten des rechteckigem Querschnitts vorgesehen sind.

4. Hydraulisch gedämpftes Aggregatlager nach Anspruch 2 oder 3, **dadurch gekennzeichnet, dass** zwischen mindestens einer der Führungsflächen (15, 16) und dem korrespondierenden Wandabschnitt ein Führungsvorsprung (17) und eine diesen aufnehmende Führungsnut (18) vorgesehen sind.

5. Hydraulisch gedämpftes Aggregatlager nach einem der Ansprüche 1 bis 4, **dadurch gekennzeichnet, dass** der Tilgerkanalquerschnitt durch den Abstand von zwei einander gegenüberliegenden Flanken (19, 20) des Stempels (13) relativ zu Wandabschnitten (21) der Kopplungsöffnung (12) einstellbar ist.

6. Hydraulisch gedämpftes Aggregatlager nach Anspruch 5, **dadurch gekennzeichnet, dass** die den Tilgerkanalquerschnitt begrenzenden Flanken (19, 20) des Stempels (13) geneigt sind.

7. Hydraulisch gedämpftes Aggregatlager nach Anspruch 6, **dadurch gekennzeichnet, dass** die Flanken (19, 20) an dem Stempel (13) sich in Richtung der Arbeitskammer (8) verjüngen.

8. Hydraulisch gedämpftes Aggregatlager nach einem der Ansprüche 1 bis 7, **dadurch gekennzeichnet, dass** der Stempel (13) die Form eines Prismas mit rechteckiger Grundfläche aufweist.

9. Hydraulisch gedämpftes Aggregatlager nach einem der Ansprüche 1 bis 8, **dadurch gekennzeichnet, dass** die Kopplungsöffnung (12) an einer Zwischenwand ausgebildet ist.

10. Hydraulisch gedämpftes Aggregatlager nach Anspruch 9, **dadurch gekennzeichnet, dass** die Zwischenwand durch ein rechteckiges Einsatzelement (26) gebildet wird.

11. Hydraulisch gedämpftes Aggregatlager nach einem der Ansprüche 1 bis 10, **dadurch gekennzeichnet, dass** zwischen der Arbeitskammer (8) und der Ausgleichskammer (9) ein stets offener Dämpfungskanal (27) vorgesehen ist.

12. Hydraulisch gedämpftes Aggregatlager nach Anspruch 11, **dadurch gekennzeichnet, dass** der Dämpfungskanal (27) an dem Einsatzelement (26) ausgebildet ist.

13. Hydraulisch gedämpftes Aggregatlager nach einem der Ansprüche 1 bis 12, **dadurch gekennzeichnet, dass** die Kopplungsöffnung (12) in eine Zwischenkammer (22) mündet, die durch eine Entkopplungsmembran (23) von der Arbeitskammer (8) getrennt ist, wobei die Entkopplungsmembran (23) einen unmittelbaren Austausch von Arbeitsmedium unterbindet.

14. Hydraulisch gedämpftes Aggregatlager nach Anspruch 13, **dadurch gekennzeichnet, dass** die Entkopplungsmembran (23) an dem Einsatzelement (26) gehalten ist.

15. Hydraulisch gedämpftes Aggregatlager nach Anspruch 13 oder 14, **dadurch gekennzeichnet, dass** die Entkopplungsmembran (23) als flexible, mit dem schwingenden Arbeitsmedium verformbare Membran ausgebildet ist.

16. Hydraulisch gedämpftes Aggregatlager nach Anspruch 13 oder 14, **dadurch gekennzeichnet, dass** die Entkopplungsmembran (23) eine in sich steife Platte ist, die in Bezug auf das schwingende Arbeitsmedium insgesamt verschiebbar gelagert ist.

## Claims

1. Hydraulically damped assembly bearing, comprising:
- an elastomeric spring body (2) and a working chamber (8) adjacent to the latter and filled with working medium,
- a flexible compensating wall (10) and a compensating chamber (9) adjacent to the latter and filled with working medium,
**characterized by**
- a substantially rectangular coupling orifice (12) between the working chamber (8) and the compensating chamber (9),
- a movable ram (13) having a substantially rectangular cross section and forming with the coupling orifice (12) a variable shock absorber duct cross section, dependent on the position of the said ram, for the working medium, and
- an actuating device (14) for moving the ram (13) in relation to the coupling orifice (12) for the purpose of setting the shock absorber duct cross section.

2. Hydraulically damped assembly bearing according to Claim 1, **characterized in that** the ram (13) has two mutually opposite guide faces (15, 16) guided on wall portions which delimit the coupling orifice (12).

3. Hydraulically damped assembly bearing according to Claim 1 or 2, **characterized in that** the substantially rectangular cross section has two long sides and two short sides, and the guide faces (15, 16) are provided on the short sides of the rectangular cross section.

4. Hydraulically damped assembly bearing according to Claim 2 or 3, **characterized in that** between at least one of the guide faces (15, 16) and the corresponding wall portion are provided a guide projection (17) and a guide groove (18) receiving the latter.

5. Hydraulically damped assembly bearing according to one of Claims 1 to 4, **characterized in that** the shock absorber duct cross section can be set by means of the spacing of two mutually opposite flanks (19, 20) of the ram. (13) in relation to wall portions (21) of the coupling orifice (12).

6. Hydraulically damped assembly bearing according to Claim 5, **characterized in that** the flanks (19, 20) of the ram (13) which delimit the shock absorber duct cross section are inclined.

7. Hydraulically damped assembly bearing according to Claim 6, **characterized in that** the flanks (19, 20) on the ram (13) taper in the direction of the working chamber (8).

8. Hydraulically damped assembly bearing according to one of Claims 1 to 7, **characterized in that** the ram (13) is in the form of a prism having a rectangular base area.

9. Hydraulically damped assembly bearing according to one of Claims 1 to 8, **characterized in that** the coupling orifice (12) is formed on an intermediate wall.

10. Hydraulically damped assembly bearing according to Claim 9, **characterized in that** the intermediate wall is formed by a rectangular insert element (26).

11. Hydraulically damped assembly bearing according to one of Claims 1 to 10, **characterized in that** an always open damping duct (27) is provided between the working chamber (8) and the compensating chamber (9).

12. Hydraulically damped assembly bearing according to Claim 11, **characterized in that** the damping duct (27) is formed on the insert element (26).

13. Hydraulically damped assembly bearing according to one of Claims 1 to 12, **characterized in that** the coupling orifice (12) issues into an intermediate chamber (22) which is separated from the working chamber (8) by a decoupling diaphragm (23), the decoupling diaphragm (23) preventing a direct exchange of working medium.

14. Hydraulically damped assembly bearing according to Claim 13, **characterized in that** the decoupling diaphragm (23) is held on the insert element (26).

15. Hydraulically damped assembly bearing according to Claim 13 or 14, **characterized in that** the decoupling diaphragm (23) is designed as a flexible diaphragm deformable by means of the oscillating working medium.

16. Hydraulically damped assembly bearing according to Claim 13 or 14, **characterized in that** the decoupling diaphragm (23) is an inherently rigid plate which is mounted so as to be displaceable, overall, with respect to the oscillating working medium.

## Revendications

1. Palier de groupe à amortissement hydraulique, comprenant :
- un corps de ressort en plastique élastomère (2) et une chambre de travail (8) adjacente à celui-ci et remplie de fluide de travail,
- une paroi de compensation flexible (10) et une chambre de compensation (9) adjacente à celle-ci et remplie de fluide de travail,
**caractérisé par**
- une ouverture de couplage essentiellement rectangulaire (12) entre la chambre de travail (8) et la chambre de compensation (9),
- un poinçon déplaçable (13) ayant une section transversale essentiellement rectangulaire, qui forme avec l'ouverture de couplage (12) une section transversale de canal d'amortissement variable pour le fluide de travail, en fonction de sa position, et
- un dispositif d'actionnement (14) pour déplacer le poinçon (13) par rapport à l'ouverture de couplage (12) pour l'ajustement de la section transversale de canal d'amortissement.

2. Palier de groupe à amortissement hydraulique selon la revendication 1, **caractérisé en ce que** le poinçon (13) présente deux surfaces de guidage (15, 16) opposées l'une à l'autre, qui sont guidées sur des portions de paroi qui délimitent l'ouverture de couplage (12).

3. Palier de groupe à amortissement hydraulique selon la revendication 1 ou 2, **caractérisé en ce que** la section transversale essentiellement rectangulaire présente deux côtés longs et deux côtés courts, et les surfaces de guidage (15, 16) sont prévues sur les côtés courts de la section transversale rectangulaire.

4. Palier de groupe à amortissement hydraulique selon la revendication 2 ou 3, **caractérisé en ce qu'**une saillie de guidage (17) et une rainure de guidage (18) recevant cette dernière sont prévues entre au moins l'une des surfaces de guidage (15, 16) et la portion de paroi correspondante.

5. Palier de groupe à amortissement hydraulique selon l'une quelconque des revendications 1 à 4, **caractérisé en ce que** la section transversale de canal d'amortissement peut être ajustée par la distance entre deux flancs opposés l'un à l'autre (19, 20) du poinçon (13) par rapport à des portions de paroi (21) de l'ouverture de couplage (12) .

6. Palier de groupe à amortissement hydraulique selon la revendication 5, **caractérisé en ce que** les flancs (19, 20) du poinçon (13) limitant la section transversale de canal d'amortissement sont inclinés.

7. Palier de groupe à amortissement hydraulique selon la revendication 6, **caractérisé en ce que** les flancs (19, 20) sur le poinçon (13) se rétrécissent dans la direction de la chambre de travail (8).

8. Palier de groupe à amortissement hydraulique selon l'une quelconque des revendications 1 à 7, **caractérisé en ce que** le poinçon (13) présente la forme d'un prisme de surface de base rectangulaire.

9. Palier de groupe à amortissement hydraulique selon l'une quelconque des revendications 1 à 8, **caractérisé en ce que** l'ouverture de couplage (12) est réalisée sur une paroi intermédiaire.

10. Palier de groupe à amortissement hydraulique selon la revendication 9, **caractérisé en ce que** la paroi intermédiaire est formée par un élément d'insert rectangulaire (26).

11. Palier de groupe à amortissement hydraulique selon l'une quelconque des revendications 1 à 10, **caractérisé en ce qu'**un canal d'amortissement toujours ouvert (27) est prévu entre la chambre de travail (8) et la chambre de compensation (9).

12. Palier de groupe à amortissement hydraulique selon la revendication 11, **caractérisé en ce que** le canal d'amortissement (27) est réalisé sur l'élément d'insert (26).

13. Palier de groupe à amortissement hydraulique selon l'une quelconque des revendications 1 à 12, **caractérisé en ce que** l'ouverture de couplage (12) débouche dans une chambre intermédiaire (22) qui est séparée de la chambre de travail (8) par une membrane de découplage (23), la membrane de découplage (23) empêchant un échange direct de fluide de travail.

14. Palier de groupe à amortissement hydraulique selon la revendication 13, **caractérisé en ce que** la membrane de découplage (23) est maintenue sur l'élément d'insert (26).

15. Palier de groupe à amortissement hydraulique selon la revendication 13 ou 14, **caractérisé en ce que** la membrane de découplage (23) est réalisée sous forme de membrane flexible déformable avec le fluide de travail oscillant.

16. Palier de groupe à amortissement hydraulique selon la revendication 13 ou 14, **caractérisé en ce que** la membrane de découplage (23) est une plaque rigide en soi, qui est montée de manière déplaçable dans l'ensemble par rapport au fluide de travail oscillant.
